# EUROPÄISCHE PATENTSCHRIFT

(11) **EP 3 246 557 B1**
(45) Veröffentlichungstag und Bekanntmachung des Hinweises auf die Patenterteilung: **03.10.2018**
(21) Anmeldenummer: 17171483.5
(22) Anmeldetag: 17.05.2017
(51) Int. Cl.: F02K 9/58, F02K 9/64, F02K 9/95

(54) **RAKETENANTRIEBSSYSTEM UND VERFAHREN ZUM BETREIBEN EINES RAKETENANTRIEBSSYSTEMS**
ROCKET PROPULSION SYSTEM AND METHOD FOR OPERATING SAME
SYSTEME DE PROPULSION D'UN FUSEE ET SON PROCEDE DE FONCTIONNEMENT

(30) Priorität: 20.05.2016 DE 102016208731
(43) Veröffentlichungstag der Anmeldung: 22.11.2017
(73) Patentinhaber: ArianeGroup GmbH, 82024 Taufkirchen (DE)
(72) Erfinder: Gotzig, Ulrich, 74177 Bad Friedrichshall (DE); Wurdak, Malte, 74219 Möckmühl (DE); Deck, Joel, 74861 Neudenau (DE); Frey, Manuel, 81549 München (DE)
(74) Vertreter: Schicker, Silvia

(56) Entgegenhaltungen:
- US-A- 5 857 323
- US-A1- 2008 256 925
- US-A1- 2008 264 035
- Brian D Reed ET AL: "HydrogedOxy gen Auxiliary Propulsion Technology HYDROGEN/OXYGEN AUXILIARY PROPULSION TECHNOLOGY", , 4. September 1991 (1991-09-04), XP055414900, Gefunden im Internet: URL:https://ntrs.nasa.gov/archive/nasa/cas i.ntrs.nasa.gov/19920011280.pdf [gefunden am 2017-10-11]

## Beschreibung

Die Erfindung betrifft ein Raketenantriebssystem und ein Verfahren zum Betreiben eines derartigen Raketenantriebssystems.

Mit Wasserstoff betriebene Raketentriebwerke beschreiben bekannte Antriebssysteme für Raumfahrzeuge. In derartigen Raketentriebwerken wird Wasserstoff mit Sauerstoff verbrannt und dadurch Schubkraft erzeugt. Anwendung finden diese Antriebssysteme beispielsweise bei den Trägerraketen der Ariane-Serie, in denen ein mit flüssigem Wasserstoff und flüssigem Sauerstoff betriebenes Raketenantriebssystem als Hauptstufe ausgebildet ist. Der Wasserstoff und der Sauerstoff werden in dafür vorgesehenen Wasserstoff- und Sauerstofftanks gespeichert.

Weiterhin sind sogenannte Wasserelektrolyse-Antriebssysteme bekannt, wie beispielsweise aus dem NASA Technical Memorandum 113157, die in Satelliten zum Einsatz kommen können. Bei einem derartigen Wasserelektrolyse-Antriebssystem wird Wasser durch Elektrolyse in Wasserstoff und Sauerstoff aufgespalten. Der so erzeugte Wasserstoff und Sauerstoff werden daraufhin zur Schubkrafterzeugung in einer Brennkammer eines Triebwerks verbrannt. Das durch Elektrolyse aufzuspaltende Wasser kann unter Raumtemperatur gespeichert werden, während flüssiger Wasserstoff bzw. flüssiger Sauerstoff unter tiefkalten Bedingungen gespeichert werden müssen. Dies erlaubt eine aufwandsreduzierte Speicherung des Wassers über eine gesamte Missionszeit von mehreren Jahren.

Brian D. Reed ET AL: "Hydrogen/Oxygen Auxiliary Propulsion Technology", 4. September 1991, XP055414900 beschreibt ein mit Wasserstoff und Sauerstoff betriebenes Raketenantriebssystem, das eine Zündkammer sowie eine Brennkammer umfasst. Im Betrieb der Antriebssystems wird ein kleiner Teil des Wasserstoffs in die Zündkammer eingespritzt und dort mit dem Sauerstoff gemischt. Das ein entsprechend hohes Mischungsverhältnis von 20 bis 60 aufweisende Sauerstoff/Wasserstoff-Gemisch wird in der Zündkammer gezündet, so dass eine heiße sauerstoffreiche Kernströmung entsteht, die von der Zündkammer in die Brennkammer strömt. Der restliche Wasserstoff wird durch Kanäle eines in der Zündkammer angeordneten Hülseneinsatzes geleitet und sorgt für eine Filmkühlung der Zündkammerwand und der Brennkammerwand.

US 5 857 323 A offenbart ein Raketenantriebssystem mit einer Brennkammer, in die über eine Injektoranordnung flüssiger Sauerstoff und gasförmiger Wasserstoff eingespritzt werden. Die Injektoranordnung umfasst einen plattenförmigen porösen Injektor für den Sauerstoff, der sich über einen Einlass der Brennkammer erstreckt. Der Wasserstoff wird durch rohrförmige Injektoren, die den porösen Injektor in einem zentralen Bereich durchsetzen, in die Brennkammer geleitet. Dadurch entsteht in der Brennkammer eine auf einen zentralen Bereich der Brennkammer begrenzte Verbrennungszone. Eine Innenverkleidung der Brennkammer kann durch Einspritzung von Sauerstoff an verschiedenen Punkten entlang der Innenverkleidung weiter von der Verbrennungszone isoliert werden.

Durch die Verwendung von Wasserstoff als Treibstoff in einem Raketenantrieb kann eine hohe Energieausbeute und so ein hoher spezifischer Impuls des Raketenantriebs erreicht werden. Nachteil dieser hohen Energieausbeute ist jedoch, dass bei der Verbrennung von Wasserstoff hohe Verbrennungstemperaturen erzielt werden, die insbesondere bei einer stöchiometrischen Verbrennung von Wasserstoff zu einer hohen thermischen Belastung der in einem Raketenantrieb verwendeten Materialien führt. Dies ist insbesondere bei Wasserelektrolyse-Antriebssystemen problematisch, da hier Wasserstoff und Sauerstoff in einem stöchiometrischen Mischungsverhältnis erzeugt werden.

Um die Verbrennungstemperaturen in derartigen Systemen zu limitieren, wird üblicherweise ein unterstöchiometrisches Sauerstoff-Wasserstoff-Gemisch verbrannt, wie beispielsweise in dem NASA Technical Memorandum 105249 offenbart. Übrig bleibender Sauerstoff kann dann als Kaltgas verwendet und an eine Umgebung des Wasserelektrolyse-Antriebssystems abgegeben werden.

Der zu erzielende Wirkungsgrad und die Leistung derartiger Raketenantriebssysteme hängt im Wesentlich von dem Mischungsverhältnis von Sauerstoff zu Wasserstoff des in der Brennkammer zu entzündenden Sauerstoff-Wasserstoff-Gemischs ab.

Der Erfindung liegt die Aufgabe zugrunde, ein Raketenantriebssystem und ein Verfahren zum Betreiben eines Raketenantriebssystems bereitzustellen, die eine Erhöhung der Leistung derartiger Raketenantriebssysteme bei einer geringeren thermischen Belastung ermöglichen.

Diese Aufgabe wird durch ein Raketenantriebssystem mit den Merkmalen des Anspruchs 1 und durch ein Verfahren zum Betreiben eines Raketenantriebssystems mit den Merkmalen des Anspruchs 10 gelöst.

Ein Raketenantriebssystem umfasst eine Brennkammer, die zur Verbrennung eines Treibstoff-Gemischs vorgesehen ist. Die Brennkammer kann mit einer Schubdüse zur Schubkrafterzeugung verbunden sein, der in der Brennkammer durch Verbrennung des Treibstoff-Gemischs erzeugte Abgase zugeführt werden. Die Schubdüse kann dafür vorgesehen sein, die in der Brennkammer erzeugten Abgase bei ihrem Austritt aus der Brennkammer bis zu einer Austrittsöffnung der Schubdüse zu beschleunigen und daraufhin an eine Umgebung des Raketenantriebssystems mit hohen Austrittsgeschwindigkeiten abzugeben.

Das Raketenantriebssystem ist dafür vorgesehen, ein Sauerstoff-Wasserstoff-Gemisch als Treibstoff-Gemisch zu verwenden, das in der Brennkammer zur Schubkrafterzeugung verbrannt wird. Zum Zuführen des Sauerstoff-Wasserstoff-Gemischs in die Brennkammer weist das Raketenantriebssystem ein Sauerstoff-Zufuhrsystem und ein Wasserstoff-Zufuhrsystem auf. Das Sauerstoff-Zufuhrsystem umfasst einen Sauerstoffzufuhrkanal und ist dazu eingerichtet, Sauerstoff in die Brennkammer zuzuführen. Das Wasserstoff-Zufuhrsystem umfasst einen Wasserstoffzufuhrkanal und ist dazu eingerichtet, Wasserstoff in die Brennkammer zuzuführen.

Eine Zündeinheit des Raketenantriebssystems, der zumindest ein Teil des in die Brennkammer zugeführten Sauerstoffs und zumindest ein Teil des in die Brennkammer zugeführten Wasserstoffs zuführbar sind, ist dazu eingerichtet, eine Verbrennung des Sauerstoff-Wasserstoff-Gemischs in der Brennkammer zu initiieren.

Das Raketenantriebssystem umfasst ferner einen Kühlkanal, der sich entlang einer Innenfläche einer Brennkammerwand erstreckt und von zumindest einem Teil des in die Brennkammer zugeführten Sauerstoffs oder von zumindest einem Teil des in die Brennkammer zugeführten Wasserstoffs durchströmbar ist.

Das hier vorgeschlagene Raketenantriebssystem ermöglicht, dass im Betrieb des Raketenantriebssystems die den Kühlkanal durchströmenden Gase zumindest abschnittsweise entlang der Innenfläche der Brennkammerwand strömen und so die Brennkammerwand kühlen. Entsprechend werden hier die durch den Kühlkanal und entlang der Innenfläche der Brennkammerwand strömenden Gase als "Kühlfilm" bezeichnet. Der durch die den Kühlkanal durchströmenden Gase gebildete Kühlfilm hat den Effekt, dass eine thermische Belastung auf die Brennkammerwand während des Betriebs des Raketenantriebssystems verringert wird. Im Speziellen kann das Raketenantriebssystem derart ausgebildet sein, dass der Kühlfilm einen Gaskern in der Brennkammer umschließt, der im Vergleich zu dem Kühlfilm höhere Verbrennungstemperaturen aufweist. So kann der Kühlfilm eine Wärmeisolierung zwischen der Brennkammerwand und dem höhere Verbrennungstemperaturen aufweisenden Gaskern bereitstellen.

Dies ermöglicht, dass im Vergleich zu bekannten Raketenantrieben, höhere Verbrennungstemperaturen in der Brennkammer erreicht werden können, ohne dadurch eine zulässige thermische Belastung der in der Brennkammer zum Einsatz kommenden Materialien zu überschreiten. Entsprechend kann das Raketenantriebssystem dazu eingerichtet sein, mit einem Sauerstoff-Wasserstoff-Gemisch betrieben zu werden, das im Vergleich zu bekannten Raketenantriebssystem ein höheres Massenmischungsverhältnis von Sauerstoff zu Wasserstoff aufweist, insbesondere ein Massenmischungsverhältnis das näher an einem stöchiometrischen Massenmischungsverhältnis liegt. So kann eine höhere Leistung und ein höherer spezifischer Impuls des Raketenantriebssystems erreicht werden.

Indem der Kühlkanal von zumindest einem Teil des in die Brennkammer zugeführten Wasserstoffs durchströmbar ist, kann das den Kühlkanal durchströmende Gas insbesondere einen reaktiven Kühlfilm, d.h. einen oxidatorarmen Kühlfilm, entlang der Innenfläche der Brennkammerwand bilden. Dies hat den Effekt, dass entlang der Brennkammerwand reduktive Bedingungen vorherrschen können und so eine Reaktion der Brennkammerwand mit Sauerstoff verhindert werden kann. Gleichzeitig können dadurch im Betrieb des Raketenantriebssystems im Bereich der Brennkammerwand geringere Verbrennungstemperaturen erreicht werden. Hierbei kann der reaktive Kühlfilm insbesondere einen sauerstoffreichen Gaskern umschließen.

In der Brennkammer kann stromabwärts einer Ausgangsfläche der Zündeinheit ein Verbrennungsabschnitt der Brennkammer angeordnet sein. Der Begriff "stromabwärts" bezieht sich hier auf die Richtung der aus der Zündeinheit austretenden Gase. Dem Verbrennungsabschnitt können die aus der Zündeinheit austretenden Gase, ein weiterer Teil des in die Brennkammer zugeführten Sauerstoffs und/oder ein weiterer Teil des in die Brennkammer zugeführten Wasserstoffs zuführbar sein.

Der Kühlkanal kann dazu eingerichtet sein, im Betrieb des Raketenantriebssystems die den Kühlkanal durchströmenden Gase derart in der Brennkammer zu leiten, dass sich in dem Verbrennungsabschnitt entlang der Innenfläche der Brennkammerwand, insbesondere im Bereich der Ausgangsfläche der Zündeinheit, der durch die den Kühlkanal durchströmenden Gase gebildeter Kühlfilm ausbildet. Der Kühlfilm kann den Gaskern in dem Verbrennungsabschnitt der Brennkammer, insbesondere im Bereich der Ausgangsfläche der Zündeinheit, umschließen, wobei der Gaskern von zumindest einem Teil der den Verbrennungsabschnitt der Brennkammer durchströmenden Gase gebildet ist. Die den Gaskern bildenden Gase können sich von den den Kühlfilm bildenden Gasen in dem Verbrennungsabschnitt der Brennkammer unterscheiden, insbesondere bezogen auf ihre chemische Zusammensetzung und ihre Temperatur. Vorzugsweise weisen die den Gaskern bildenden Gase im Vergleich zu den den Kühlfilm bildenden Gasen im Bereich der Innenfläche der Brennkammerwand eine höhere Temperatur auf.

Der Kühlkanal kann einen ersten Abschnitt umfassen, der sich in dem stromabwärts der Ausgangsfläche der Zündeinheit angeordneten Verbrennungsabschnitt der Brennkammer entlang der Innenfläche der Brennkammerwand erstreckt. Der Kühlkanal kann derart ausgebildet sein, dass in dem ersten Abschnitt des Kühlkanals der Kühlfilm entlang der Innenfläche der Brennkammerwand ausgebildet ist.

Wie voranstehend beschrieben, kann der Kühlkanal von dem aus der Zündeinheit austretenden Verbrennungsgasgemisch durchströmbar sein. Hierzu kann der erste Abschnitt des Kühlkanals mit der Ausgangsfläche der Zündeinheit verbunden sein. Insbesondere kann die Ausgangsfläche der Zündeinheit in den ersten Abschnitt des Kühlkanals münden und senkrecht zu dem ersten Abschnitt des Kühlkanals angeordnet sein.

Alternativ kann der erste Abschnitt des Kühlkanals mit dem Sauerstoff-Zufuhrsystem oder dem Wasserstoff-Zufuhrsystem verbunden sein, sodass der Kühlkanal von dem in die Brennkammer zugeführten Sauerstoff oder von dem in die Brennkammer zugeführten Wasserstoff durchströmbar ist.

Der Kühlkanal umfasst einen zweiten Abschnitt, der sich zwischen einer Außenfläche der Zündeinheit und einem der Außenfläche der Zündeinheit gegenüberliegenden Abschnitt der Innenfläche der Brennkammerwand erstreckt. Der zweite Abschnitt des Kühlkanals kann in Form eines zwischen der Außenfläche der Zündeinheit und dem der Außenfläche der Zündeinheit gegenüberliegenden Abschnitt der Innenfläche der Brennkammerwand definierten Ringspalts ausgebildet sein. Mit anderen Worten, der zweite Abschnitt des Kühlkanals kann dazu eingerichtet sein, die den zweiten Abschnitt des Kühlkanals durchströmenden Gase entlang der Außenfläche der Zündeinheit zu leiten. Dies hat den Effekt, dass die den zweiten Abschnitt des Kühlkanals durchströmenden Gase, insbesondere den zweiten Abschnitt des Kühlkanals durchströmender Sauerstoff oder Wasserstoff, sich erwärmen, indem diese entlang der Außenfläche der Zündeinheit strömen, und so die Zündeinheit kühlen können.

Der zweite Abschnitt des Kühlkanals mündet in den stromabwärts der Ausgangsfläche der Zündeinheit angeordneten Verbrennungsabschnitt der Brennkammer, insbesondere in den ersten Abschnitt des Kühlkanals.

Damit der Kühlkanal von dem in die Brennkammer zugeführten Sauerstoff oder von dem in die Brennkammer zugeführten Wasserstoff durchströmbar ist, kann der Kühlkanal, insbesondere der zweite Abschnitt des Kühlkanals, mit dem Sauerstoff-Zufuhrsystem oder mit dem Wasserstoff-Zufuhrsystem verbunden sein. Im Speziellen kann der Kühlkanal, insbesondere der zweite Abschnitt des Kühlkanals, mit dem Sauerstoffzufuhrkanal des Sauerstoff-Zufuhrsystems oder dem Wasserstoffzufuhrkanal des Wasserstoff-Zufuhrsystem verbunden sein.

Ferner kann in dem Kühlkanal, insbesondere in dem zweiten Abschnitt des Kühlkanals, ein Drallerzeugungsmittel, insbesondere ein Swirler, vorgesehen sein. Alternativ kann das Drallerzeugungsmittel in Form von in dem Kühlkanal vorgesehenen tangential angestellten Bohrungen bereitgestellt sein. Das Drallerzeugungsmittel kann dazu eingerichtet sein, die den Kühlkanal durchströmenden Gase in Drall zu versetzen. Dies hat zum einen den Effekt, dass die Verweilzeit der den Kühlkanal durchströmenden Gase in dem Kühlkanal erhöht und so die für die Zündeinheit bereitgestellte Kühlfunktion verbessert wird. Zum anderen kann dadurch eine stabilere Ausbildung des Kühlfilms in dem Verbrennungsabschnitt erreicht werden.

Alternativ oder zusätzlich kann in dem Kühlkanal, insbesondere in dem zweiten Abschnitt des Kühlkanals, eine Mehrzahl von insbesondere parallel durchströmbaren Einzelströmungspfaden vorgesehen sein.

Zur Zufuhr von Sauerstoff in den Kühlkanal kann der Kühlkanal mit dem Sauerstoff-Zufuhrsystem verbunden sein. Das Sauerstoff-Zufuhrsystem kann derart bereitgestellt sein, dass der Sauerstoffzufuhrkanal des Sauerstoff-Zufuhrsystems in den Kühlkanal, insbesondere den zweiten Abschnitt des Kühlkanals, mündet. Alternativ kann der Kühlkanal, insbesondere der zweite Abschnitt des Kühlkanals, von dem Sauerstoffzufuhrkanal des Sauerstoff-Zufuhrsystems abzweigen und insbesondere entlang zumindest eines Teilbereichs des Kühlkanals, insbesondere des zweiten Abschnitts des Kühlkanals, parallel zu dem Sauerstoffzufuhrkanal verlaufen.

Alternativ kann der Kühlkanal mit dem Wasserstoff-Zufuhrsystem verbunden sein, um von dem in die Brennkammer zugeführten Wasserstoff durchströmbar zu sein. Entsprechend kann das Wasserstoff-Zufuhrsystem derart bereitgestellt sein, dass der Wasserstoffzufuhrkanal des Wasserstoff-Zufuhrsystems in den Kühlkanal, insbesondere den zweiten Abschnitt des Kühlkanals mündet. Ferner kann der Kühlkanal, insbesondere der zweite Abschnitt des Kühlkanals von dem Wasserstoffzufuhrkanal des Wasserstoff-Zufuhrsystems abzweigen und insbesondere entlang zumindest eines Teilbereichs des Kühlkanals, insbesondere des zweiten Abschnitts des Kühlkanals, parallel zu dem Wasserstoffzufuhrkanal verlaufen.

Zum Initiieren der Verbrennung des in die Brennkammer eingeleiteten Sauerstoff-Wasserstoff-Gemischs ist die Zündeinheit in dem Raketenantriebssystem bereitgestellt. Die Zündeinheit des Raketenantriebssystems kann eine Katalysatorkammer umfassen, der der Zündeinheit zugeführte Sauerstoff und der der Zündeinheit zugeführte Wasserstoff zuführbar sind. Die Katalysatorkammer ist vorzugsweise dazu eingerichtet, eine Verbrennung des in die Katalysatorkammer eingeleiteten Sauerstoff-Wasserstoff-Gemischs mittels eines Katalysators zu initiieren. Mit anderen Worten, die Katalysatorkammer kann einen Strömungsabschnitt eines aus zumindest einem Teil des in die Brennkammer geleiteten Sauerstoffs und zumindest einem Teil des in die Brennkammer geleiteten Wasserstoffs gebildeten Sauerstoff-Wasserstoff-Gemischs ausbilden. Dieser durch die Katalysatorkammer gebildete Strömungsabschnitt, in dem mittels des Katalysators die Aktivierungsenergie zur Initiierung der Verbrennung des der Katalysatorkammer zugeführten Sauerstoff-Wasserstoff-Gemischs herabgesetzt ist, ist vorzugsweise dazu eingerichtet, das die Katalysatorkammer durchströmende Sauerstoff-Wasserstoff-Gemisch katalytisch zu entzünden. Ferner kann die Katalysatorkammer derart ausgebildet sein, dass die in den Verbrennungsabschnitt aus der Katalysatorkammer austretenden Gase eine Temperatur aufweisen, die zur Initiierung der Verbrennung des in die Brennkammer eingeleiteten Sauerstoff-Wasserstoff-Gemischs ausreichend ist. Die Verwendung einer Katalysatorkammer weist den Effekt einer stabilen Zündung des in die Brennkammer geleiteten Sauerstoff-Wasserstoff-Gemischs auf.

Das Raketenantriebssystem ist vorzugsweise derart eingerichtet, dass im Betrieb des Raketenantriebssystems der Zündeinheit, insbesondere der Katalysatorkammer der Zündeinheit, in die Brennkammer zugeführter Sauerstoff und in die Brennkammer zugeführter Wasserstoff in einem unterstöchiometrischen Massenmischungsverhältnis, insbesondere in einem Massenmischungsverhältnis von Sauerstoff zu Wasserstoff von kleiner als oder gleich 2, zuführbar sind. Dies hat den Effekt, dass die Dauerfestigkeit des in der Katalysatorkammer verwendeten Katalysators erhöht werden kann.

In einer Weiterentwicklung kann die Zündeinheit eine Vormischkammer zur Vormischung des der Zündeinheit zugeführten Sauerstoffs und des der Zündeinheit zugeführten Wasserstoffs vor der Zufuhr des Sauerstoff-Wasserstoff-Gemischs in die Katalysatorkammer umfassen. Mit anderen Worten, die Vormischkammer kann dazu eingerichtet sein, den der Katalysatorkammer zuzuführenden Sauerstoff und den der Katalysatorkammer zuzuführenden Wasserstoff miteinander zu vermischen, um das in die Katalysatorkammer einzuleitende Sauerstoff-Wasserstoff-Gemisch zu erzeugen. Die Vormischkammer kann stromaufwärts einer Eingangsfläche der Katalysatorkammer, über die der Katalysatorkammer Sauerstoff und Wasserstoff zuführbar sind, angeordnet sein und insbesondere in die Eingangsfläche der Katalysatorkammer münden. Der Begriff "stromaufwärts" bezieht sich hier auf die Richtung der durch die Katalysatorkammer strömenden Gase. Weiterhin kann die Vormischkammer derart ausgebildet sein, dass diese einen sich in Strömungsrichtung größer werdenden Strömungsquerschnitt für die der Katalysatorkammer zuzuführenden Gase aufweist.

So kann das die Vormischkammer durchströmende Sauerstoff-Wasserstoff-Gemisch entspannt und gebremst werden, was zu einer verbesserten Vermischung des Sauerstoff-Wasserstoff-Gemischs führen kann.

In einer Weiterentwicklung kann im Bereich der Eingangsfläche der Katalysatorkammer ein Flammenrückschlagverhinderer angeordnet sein. Der Flammenrückschlagverhinderer kann dazu eingerichtet sein, eine Zündung des in die Katalysatorkammer zuzuführenden Sauerstoff-Wasserstoff-Gemischs stromaufwärts der Katalysatorkammer zu verhindern.

Zur Zufuhr von Sauerstoff in die Zündeinheit, insbesondere in die Vormischkammer der Zündeinheit, kann eine Sauerstoffzufuhröffnung in einer dem Sauerstoffzufuhrkanal des Sauerstoff-Zufuhrsystems zugewandten Vormischkammerwand ausgebildet sein. Entsprechend, um Wasserstoff in die Zündeinheit, insbesondere die Vormischkammer der Zündeinheit, zu leiten, kann der Wasserstoffzufuhrkanal des Wasserstoff-Zufuhrsystems in die Zündeinheit, insbesondere die Vormischkammer der Zündeinheit, münden und insbesondere senkrecht zu der Eingangsfläche der Katalysatorkammer verlaufen. Alternativ kann eine Wasserstoffzufuhröffnung zur Zufuhr von Sauerstoff in die Zündeinheit, insbesondere in die Vormischkammer der Zündeinheit, in einer dem Wasserstoffzufuhrkanal des Wasserstoff-Zufuhrsystems zugewandten Vormischkammerwand ausgebildet sein.

In einer Weiterentwicklung kann die Zündeinheit zumindest abschnittsweise von einem Kernkanal durchsetzt sein, über den der Brennkammer zugeführter Sauerstoff dem Verbrennungsabschnitt zuführbar ist. Entsprechend kann der Kernkanal von in die Brennkammer zugeführtem Sauerstoff durchströmbar sein. Hierzu kann der Kernkanal mit dem Sauerstoffzufuhrkanal des Sauerstoff-Zufuhrsystems verbunden sein, wobei der Sauerstoffzufuhrkanal insbesondere in den Kernkanal mündet. Alternativ kann der Kernkanal von dem Sauerstoffzufuhrkanal abzweigen und insbesondere entlang zumindest eines Teilbereichs parallel zu dem Sauerstoffzufuhrkanal verlaufen.

Der Kernkanal kann dazu eingerichtet sein, die den Kernkanal durchströmenden Gase entlang einer Außenfläche einer inneren Katalysatorkammerwand zu leiten. Dies hat den Effekt, dass entlang der inneren Katalysatorkammerwand strömende Gase, insbesondere den Kernkanal durchströmender Sauerstoff, sich erwärmen und so die Katalysatorkammer kühlen können/kann.

Das Raketenantriebssystem kann ferner eine Steuereinheit umfassen, die dazu eingerichtet sein kann, das Sauerstoff-Zufuhrsystem und das Wasserstoff-Zufuhrsystem derart zu steuern, dass das Raketenantriebssystem alternierend in einem ersten Betriebsmodus in dem Sauerstoff und Wasserstoff in einem ersten Massenmischungsverhältnis von Sauerstoff zu Wasserstoff in die Brennkammer zugeführt werden, und einem zweiten Betriebsmodus, in dem Sauerstoff und Wasserstoff in einem zweiten Massenmischungsverhältnis von Sauerstoff zu Wasserstoff, das größer ist als das erste Massenmischungsverhältnis, in die Brennkammer zugeführt werden, betrieben wird. Unter einem "alternierenden Betrieb" des Raketenantriebssystems wird hier ein Betrieb verstanden, bei dem das Raketenantriebssystem abwechselnd und wiederholend in dem ersten Betriebsmodus und in dem zweiten Betriebsmodus betrieben wird.

Durch das alternierende Betreiben des Raketenantriebssystems in dem ersten Betriebsmodus, in dem Sauerstoff und Wasserstoff in dem ersten Massenmischungsverhältnis der Brennkammer zugeführt werden, und dem zweiten Betriebsmodus, in dem Sauerstoff und Wasserstoff in dem zweiten Massenmischungsverhältnis der Brennkammer zugeführt werden, kann im Vergleich zu gegenwärtig bekannten Verfahren ein Sauerstoff-Wasserstoff-Gemisch der Brennkammer zugeführt werden, das insgesamt einen höheren Anteil an Sauerstoff aufweist. Insbesondere ermöglicht das Verfahren so, dass im Mittel eine stöchiometrische Verbrennung erreicht werden kann, ohne dadurch eine zulässige thermische Belastung der in der Brennkammer zum Einsatz kommenden Materialien zu überschreiten. Dadurch kann der Gesamtmassenstrom des aus der Brennkammer in die Schubdüse austretenden Gases und insbesondere der Schub und die Leistung des Raketenantriebssystems erhöht werden.

Ein Verfahren zum Betreiben eines Raketenantriebssystems umfasst die Schritte des Zuführens von Sauerstoff in eine Brennkammer, des Zuführens von Wasserstoff in die Brennkammer und des Leitens zumindest eines Teils des in die Brennkammer zugeführten Sauerstoffs und zumindest eines Teils des in die Brennkammer zugeführten Wasserstoffs in eine Zündeinheit. Weiterhin erfolgt ein Initiieren einer Verbrennung des Sauerstoff-Wasserstoff-Gemischs in der Brennkammer mittels der Zündeinheit. Zumindest ein Teil des in die Brennkammer zugeführten Sauerstoffs oder zumindest ein Teil des in die Brennkammer zugeführten Wasserstoffs werden durch einen Kühlkanal geleitet, der sich entlang einer Innenfläche einer Brennkammerwand erstreckt.

Der Kühlkanal kann einen ersten Abschnitt umfassen, der sich in einem stromabwärts einer Ausgangsfläche der Zündeinheit angeordneten Verbrennungsabschnitt der Brennkammer entlang der Innenfläche der Brennkammerwand erstreckt. Zusätzlich umfasst der Kühlkanal einen zweiten Abschnitt, der sich zwischen einer Außenfläche der Zündeinheit und einem der Außenfläche der Zündeinheit gegenüberliegenden Abschnitt der Innenfläche der Brennkammerwand erstreckt und insbesondere in den stromabwärts der Ausgangsfläche der Zündeinheit angeordneten Verbrennungsabschnitt der Brennkammer mündet.

In einer Weiterentwicklung kann der Kühlkanal, insbesondere der zweite Abschnitt des Kühlkanals mit einem Sauerstoffzufuhrkanal eines Sauerstoff-Zufuhrsystems oder einem Wasserstoffzufuhrkanal eines Wasserstoffzufuhr-Systems verbunden sein. In dem Kühlkanal, insbesondere dem zweiten Abschnitt des Kühlkanals, kann ein Drallerzeugungsmittel, insbesondere ein Swirler, angeordnet sein. Alternativ oder zusätzlich kann in dem Kühlkanal, insbesondere dem zweiten Abschnitt des Kühlkanals, eine Mehrzahl von insbesondere parallel durchströmbaren Einzelströmungspfaden vorgesehen sein.

Ferner kann der Sauerstoffzufuhrkanal des Sauerstoff-Zufuhrsystems oder der Wasserstoffzufuhrkanal des Wasserstoff-Zufuhrsystems in den Kühlkanal, insbesondere den zweiten Abschnitt des Kühlkanals münden. Alternativ kann der Kühlkanal, insbesondere der zweite Abschnitt des Kühlkanals von dem Sauerstoffzufuhrkanal oder dem Wasserstoffzufuhrkanal abzweigen und insbesondere entlang zumindest eines Teilbereichs parallel zu dem Sauerstoffzufuhrkanal des Sauerstoff-Zufuhrsystems oder dem Wasserstoffzufuhrkanal des Wasserstoff-Zufuhrsystems verlaufen.

In einer Weiterentwicklung kann die Zündeinheit zumindest abschnittsweise von einem Kernkanal durchsetzt sein, durch den insbesondere in die Brennkammer zuzuführender Sauerstoff geleitet wird.

Bevorzugte Ausführungsformen der Erfindung werden im Folgenden anhand der beigefügten schematischen Zeichnungen näher erläutert, wobei
- Figur 1: eine schematische Ansicht eines Raketenantriebssystems zeigt,
- Figur 2: ein Diagramm zeigt, dass einen Zusammenhang zwischen der Verbrennungstemperatur in einer Brennkammer und einem Mischungsverhältnis eines in der Brennkammer zu entzündenden Sauerstoff-Wasserstoff-Gemischs veranschaulicht,
- Figur 3: einen vergrößerten Längsschnitt einer in Figur 1 gezeigten Brennkammer des Raketenantriebssystems einer ersten Ausführungsform zeigt,
- Figur 4: eine Brennkammer des Raketenantriebssystems einer Anordnung zeigt, die nicht Bestandteil des beanspruchten Gegenstands ist,

- Figur 5: eine Brennkammer des Raketenantriebssystems einer zweiten Ausführungsform zeigt,
- Figur 6: eine Brennkammer des Raketenantriebssystems einer dritten Ausführungsform zeigt,
- Figur 7: eine Brennkammer des Raketenantriebssystems einer weiteren Anordnung zeigt, die nicht Bestandteil des beanspruchten Gegenstands ist.

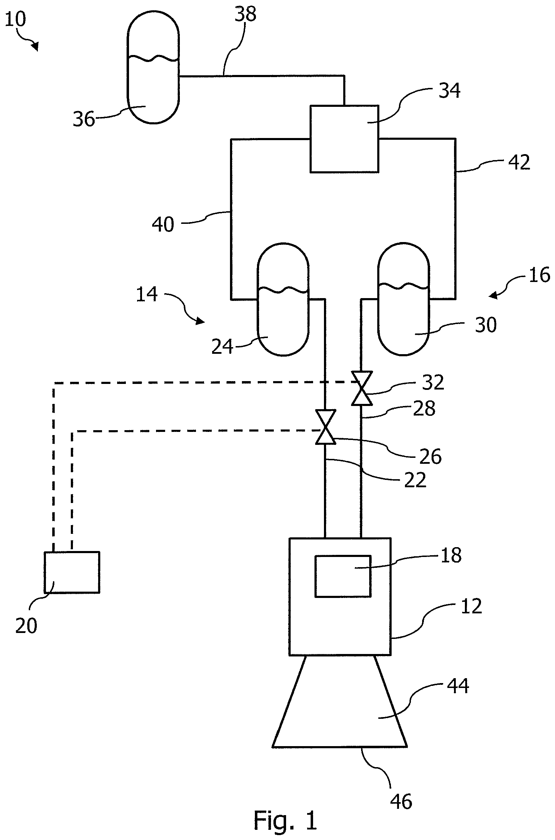

Figur 1 zeigt ein Raketenantriebssystem 10, das eine Brennkammer 12, ein mit der Brennkammer 12 verbundenes Sauerstoff-Zufuhrsystem 14 und ein mit der Brennkammer 12 verbundenes Wasserstoff-Zufuhrsystem 16 umfasst. Das Sauerstoff-Zufuhrsystem 14 ist dazu eingerichtet, Sauerstoff in die Brennkammer 12 zuzuführen. Entsprechend ist das Wasserstoff-Zufuhrsystem 16 dazu eingerichtet, Wasserstoff in die Brennkammer 12 zuzuführen. Eine Zündeinheit 18 des Raketenantriebssystems 10, der zumindest ein Teil des in die Brennkammer 12 zugeführten Sauerstoffs und zumindest ein Teil des in die Brennkammer 12 zugeführten Wasserstoffs zuführbar sind, ist dazu eingerichtet, eine Verbrennung des Sauerstoff-Wasserstoff-Gemischs in der Brennkammer 12 zu initiieren.

Das Raketenantriebssystem 10 umfasst weiterhin eine Steuereinheit 20, die dazu eingerichtet ist, das Sauerstoff-Zufuhrsystem 14 und das Wasserstoff-Zufuhrsystem 16 derart zu steuern, dass das Raketenantriebssystem 10 alternierend in einem ersten Betriebsmodus, in dem Sauerstoff und Wasserstoff in einem ersten Massenmischungsverhältnis von Sauerstoff zu Wasserstoff in die Brennkammer 12 zugeführt werden, und in einem zweiten Betriebsmodus, in dem Sauerstoff und Wasserstoff in einem zweiten Massenmischungsverhältnis von Sauerstoff zu Wasserstoff, das größer ist als das erste Massenmischungsverhältnis, in die Brennkammer 12 zugeführt werden, betrieben wird.

Das Sauerstoff-Zufuhrsystem 14 umfasst eine mit der Brennkammer 12 verbundene Sauerstoffzufuhrleitung 22, die von der Brennkammer 12 zuzuführendem Sauerstoff durchströmbar ist. Die Sauerstoffzufuhrleitung 22 ist mit einem Sauerstoff-Speicher 24 des Sauerstoff-Zufuhrsystems 14 zum Speichern von Sauerstoff verbunden und dazu eingerichtet, Sauerstoff aus dem Sauerstoff-Speicher 24 der Brennkammer 12 zuzuführen. In der Sauerstoffzufuhrleitung 22 ist ein mit der Steuereinheit 20 verbundenes Sauerstoffzufuhrventil 26 bereitgestellt, wobei ein der Brennkammer 12 zuzuführender Sauerstoffmassenstrom mittels des Sauerstoffzufuhrventils 26 einstellbar ist. Die Steuereinheit 20 ist dazu eingerichtet, über das Sauerstoffzufuhrventil 26 den in die Brennkammer 12 zuzuführenden Sauerstoffmassenstrom zu steuern.

Das Wasserstoff-Zufuhrsystem 16 umfasst eine mit der Brennkammer 12 verbundene Wasserstoffzufuhrleitung 28, die von der Brennkammer 12 zuzuführendem Wasserstoff durchströmbar ist. Die Wasserstoffzufuhrleitung 28 ist mit einem Wasserstoff-Speicher 30 des Wasserstoff-Zufuhrsystems 16 zum Speichern von Wasserstoff verbunden und dazu eingerichtet, Wasserstoff aus dem Wasserstoff-Speicher 30 der Brennkammer 12 zuzuführen. In der Wasserstoffzufuhrleitung 28 ist ein mit der Steuereinheit 20 verbundenes Wasserstoffzufuhrventil 32 bereitgestellt, mittels dessen ein über die Wasserstoffzufuhrleitung 28 der Brennkammer 12 zuzuführender Wasserstoffmassenstrom einstellbar ist. Die Steuereinheit 20 ist dazu eingerichtet, über das Wasserstoffzufuhrventil 32 den in die Brennkammer 12 zuzuführenden Wasserstoffmassenstrom zu steuern.

Das Sauerstoff-Zufuhrsystem 14 und das Wasserstoff-Zufuhrsystem 16 sind mit einer Elektrolyseeinheit 34 verbunden. Die Elektrolyseeinheit 34 ist dazu eingerichtet, aus einem Wasserspeicher 36 über eine Wasserleitung 38 in die Elektrolyseeinheit 34 zugeführtes Wasser durch Elektrolyse in Wasserstoff und Sauerstoff aufzuspalten. In der Wasserleitung kann ferner ein mit der Steuereinheit 20 verbundenes Wasserzufuhrventil bereitgestellt sein, wobei ein der Elektrolyseeinheit 34 zuführender Wassermassenstrom mittels des Wasserzufuhrventils einstellbar ist. Stromaufwärts des Wasserzufuhrventils, d.h. entgegen der Zufuhrrichtung des Wassers, kann zudem ein Rückschlagventil angeordnet sein. Der in der Elektrolyseeinheit 34 erzeugte Sauerstoff ist über eine Sauerstoffleitung 40 dem Sauerstoff-Speicher 24 zuführbar. Entsprechend ist der in der Elektrolyseeinheit 34 erzeugte Wasserstoff über eine Wasserstoffleitung 42 dem Wasserstoff-Speicher 30 zuführbar. In der Sauerstoffleitung 40 und in der Wasserstoffleitung 42 kann weiterhin jeweils ein Rückschlagventil vorgesehen sein.

Die Brennkammer 12 des Raketenantriebssystems 10 ist mit einer Schubdüse 44 verbunden, der die in der Brennkammer 12 durch Verbrennung des Sauerstoff-Wasserstoff-Gemischs entstehenden Abgase zuführbar sind. Die Schubdüse 44 ist dafür vorgesehen, die in der Brennkammer 12 erzeugten Abgase bei ihrem Austritt aus der Brennkammer 12 bis zu einer Austrittsöffnung 46 der Schubdüse 44 zu beschleunigen und daraufhin an eine Umgebung des Raketenantriebssystems 10 mit hohen Austrittsgeschwindigkeiten abzugeben, um eine Schubkraft zu erzeugen.

Die Steuereinheit 20 ist vorzugsweise dazu eingerichtet, das Sauerstoff-Zufuhrsystem 14 und das Wasserstoff-Zufuhrsystem 16 derart zu steuern, dass der Brennkammer 12 des Raketenantriebssystems 10 in dem ersten Betriebsmodus Sauerstoff und Wasserstoff in dem ersten Massenmischungsverhältnis zugeführt werden, wobei das erste Massenmischungsverhältnis ein unterstöchiometrisches Massenmischungsverhältnis von Sauerstoff zu Wasserstoff ist, insbesondere ein Massenmischungsverhältnis kleiner als oder gleich 2. In dem zweiten Betriebsmodus des Raketenantriebssystems 10 ist die Steuereinheit 20 vorzugsweise dazu eingerichtet, das Sauerstoff-Zufuhrsystem 14 und das Wasserstoff-Zufuhrsystem 16 derart zu steuern, dass der Brennkammer 12 des Raketenantriebssystems 10 Sauerstoff und Wasserstoff in dem zweiten Massenmischungsverhältnis zugeführt werden, wobei das zweite Massenmischungsverhältnis ein überstöchiometrisches Massenmischungsverhältnis von Sauerstoff zu Wasserstoff ist, insbesondere ein Massenmischungsverhältnis größer als oder gleich 50.

Im Speziellen kann die Steuereinheit 20 dazu eingerichtet sein, das Sauerstoff-Zufuhrsystem 14 und das Wasserstoff-Zufuhrsystem 16 derart zu steuern, dass im ersten Betriebsmodus des Raketenantriebssystems 10 ein erster Wasserstoffmassenstrom in die Brennkammer 12 zugeführt wird, der größer ist als ein zweiter Wasserstoffmassenstrom, der im zweiten Betriebsmodus des Raketenantriebssystems 10 in die Brennkammer 12 zugeführt wird. Insbesondere kann die Steuereinheit 20 dazu eingerichtet sein, das Sauerstoff-Zufuhrsystem 14 und das Wasserstoff-Zufuhrsystem 16 derart zu steuern, dass im zweiten Betriebsmodus des Raketenantriebssystems 10 die Zufuhr von Wasserstoff in die Brennkammer 12 unterbrochen wird.

Alternativ oder zusätzlich kann die Steuereinheit 20 dazu eingerichtet sein, das Sauerstoff-Zufuhrsystem 14 und das Wasserstoff-Zufuhrsystem 16 derart zu steuern, dass im ersten Betriebsmodus des Raketenantriebssystems 10 ein erster Sauerstoffmassenstrom in die Brennkammer 12 zugeführt wird, der kleiner ist als ein zweiter Sauerstoffmassenstrom, der im zweiten Betriebsmodus des Raketenbetriebssystems 10 in die Brennkammer 12 zugeführt wird.

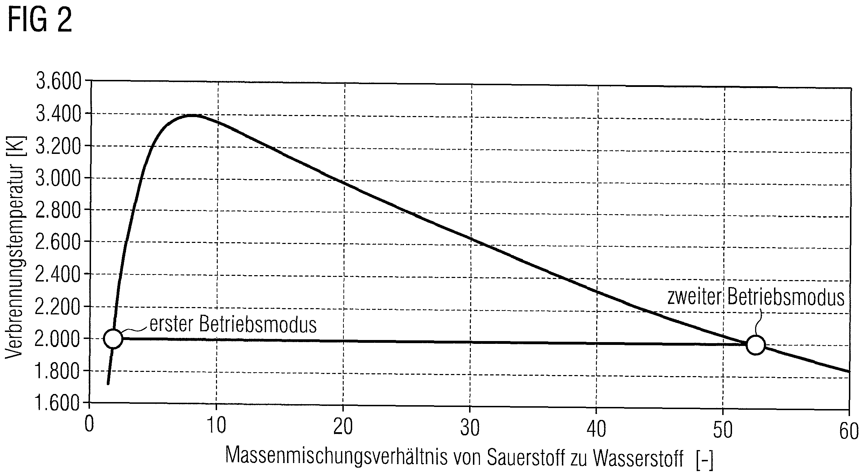

Figur 2 zeigt ein Diagramm, das einen beispielhaften Betrieb des in Figur 1 gezeigten Raketenantriebssystems 10 in dem ersten Betriebsmodus und in dem zweiten Betriebsmodus des Raketenantriebssystems 10 veranschaulicht. Darin dargestellt ist die Verbrennungstemperatur in der Brennkammer 12 als Funktion des Massenmischungsverhältnisses von Sauerstoff zu Wasserstoff des in die Brennkammer 12 zugeführten Sauerstoff-Wasserstoff-Gemischs. Die Abszisse des Diagramms zeigt das Massenmischungsverhältnis von Sauerstoff zu Wasserstoff des in die Brennkammer 12 zugeführten Sauerstoff-Wasserstoff-Gemischs und die Ordinate des Diagramms die Verbrennungstemperatur in der Brennkammer 12, die durch Verbrennung des in die Brennkammer 12 zugeführten Sauerstoff-Wasserstoff-Gemischs entsteht. Wie in Figur 2 veranschaulicht, ist die Verbrennungstemperatur in der Brennkammer 12 bei der Verbrennung eines stöchiometrischen Sauerstoff-Wasserstoff-Gemischs, d.h. bei einem Massenmischungsverhältnis von Sauerstoff zu Wasserstoff von 8, am höchsten.

In dem ersten Betriebsmodus des Raketenantriebssystems 10 wird Sauerstoff und Wasserstoff in einem Massenmischungsverhältnis von im Wesentlichen 2 in die Brennkammer 12 zugeführt. In dem zweiten Betriebsmodus des Raketenantriebssystems 10 wird Sauerstoff und Wasserstoff in einem Massenmischungsverhältnis von im Wesentlichen 52 der Brennkammer 12 zugeführt. In dem ersten und dem zweiten Betriebsmodus des Raketenantriebssystems 10 beträgt die Verbrennungstemperatur jeweils 2000 K.

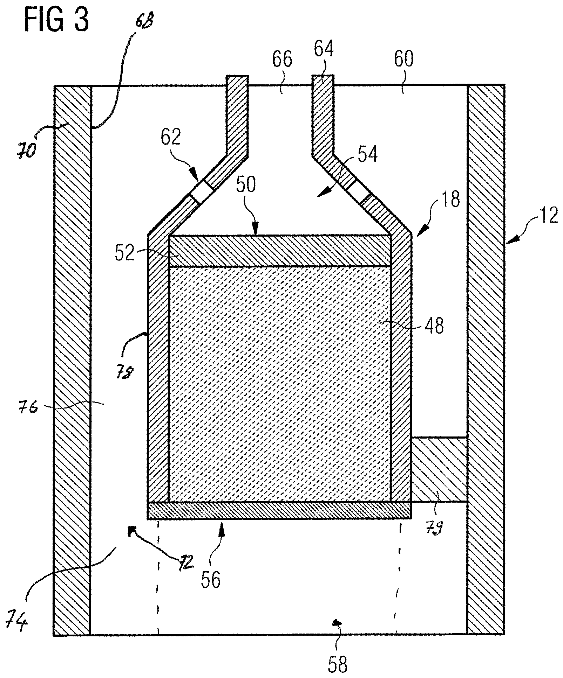

Figur 3 zeigt einen vergrößerten Längsschnitt der in Figur 1 gezeigten Brennkammer 12 des Raketenantriebssystems 10 mit der darin angeordneten Zündeinheit 18. Die Zündeinheit 18 umfasst eine in der Brennkammer 12 angeordnete Katalysatorkammer 48, die dazu eingerichtet ist, die Verbrennung des in die Brennkammer 12 zugeführten Sauerstoff-Wasserstoff-Gemischs zu initiieren.

Die Katalysatorkammer 48 weist eine Eingangsfläche 50 auf, über die der Katalysatorkammer 48 in die Brennkammer 12 zugeführter Sauerstoff und Wasserstoff zuführbar sind. Im Bereich der Eingangsfläche 50 der Katalysatorkammer 48 ist ein Flammenrückschlagverhinderer 52 in der Katalysatorkammer 48 angeordnet, der dazu eingerichtet ist, eine Entzündung des in die Katalysatorkammer 48 zuzuführenden Sauerstoff-Wasserstoff-Gemischs stromaufwärts der Katalysatorkammer 48 zu verhindern.

Stromaufwärts des Flammenrückschlagverhinderers 52 umfasst die Zündeinheit 18 weiterhin eine Vormischkammer 54 zur Vormischung des der Zündeinheit 18 zugeführten Sauerstoffs und des der Zündeinheit 18 zugeführten Wasserstoffs vor der Zufuhr des Sauerstoff-Wasserstoff-Gemischs in die Katalysatorkammer 48. Die Vormischkammer 54 mündet in die Eingangsfläche 50 der Katalysatorkammer 48 und ist im Wesentlichen senkrecht zu dieser angeordnet. Ein Strömungsquerschnitt der Vormischkammer 54 ist derart ausgebildet, dass dieser in Richtung der Eingangsfläche 50 der Katalysatorkammer 48, d.h. in Strömungsrichtung, größer wird.

Die Katalysatorkammer 48 umfasst weiterhin eine Ausgangsfläche 56, über die ein in der Katalysatorkammer 48 der Zündeinheit 18 erzeugtes Verbrennungsgasgemisch einem stromabwärts der Ausgangsfläche 56 der Katalysatorkammer 48 angeordneten Verbrennungsabschnitt 58 der Brennkammer 12 zuführbar ist.

Das Sauerstoff-Zufuhrsystem 14 umfasst einen in der Brennkammer 12 angeordneten Sauerstoffzufuhrkanal 60, über den ein erster Teil des in die Brennkammer zugeführten Sauerstoffs der Vormischkammer 54 der Zündeinheit 18 über eine Sauerstoffzufuhröffnung 62 zuführbar ist. Die Sauerstoffzufuhröffnung 62 zur Zufuhr von Sauerstoff in die Vormischkammer 54 der Zündeinheit 18 ist in einer dem Sauerstoffzufuhrkanal 60 zugewandten Vormischkammerwand 64 ausgebildet.

Das Wasserstoff-Zufuhrsystem 16 umfasst einen in der Brennkammer 12 angeordneten Wasserstoffzufuhrkanal 66, über den der in die Brennkammer 12 zugeführte Wasserstoff der Vormischkammer 54 der Zündeinheit 18 zuführbar ist. Der Wasserstoffzufuhrkanal 66 zur Zufuhr von Wasserstoff in die Vormischkammer 54 der Zündeinheit 18 mündet in die Vormischkammer 48 und ist im Wesentlichen senkrecht zu der Eingangsfläche 50 der Katalysatorkammer 48 angeordnet. In der hier gezeigten Ausführungsform des Raketenantriebssystems 10 weist der Wasserstoffzufuhrkanal 66 einen kreisförmigen Querschnitt auf, wobei der Sauerstoffzufuhrkanal 60 von dem Wasserstoffzufuhrkanal 66 durchsetzt wird. Entsprechend ist der Sauerstoffzufuhrkanal 60 in Form eines Ringspalts mit einem ringförmigen Querschnitt ausgebildet.

Die Zündeinheit 18 des Raketenantriebssystems 10 ist derart ausgebildet, dass die Vormischkammerwand 64 eine Katalysatorkammerwand, die Vormischkammer 54 und den Wasserstoffzufuhrkanal 66 bildet, wobei der Sauerstoffzufuhrkanal 60 zwischen einer Innenfläche 68 einer Brennkammerwand 70 der Brennkammer 12 und einer Außenfläche der Katalysatorkammerwand 64 angeordnet ist.

Das Raketenantriebssystem 10 umfasst ferner einen Kühlkanal 72, der sich entlang der Innenfläche 68 der Brennkammerwand 70 erstreckt. Der Kühlkanal 72 ist von zumindest einem Teil des in die Brennkammer 12 zugeführten Sauerstoffs durchströmbar. Weiterhin umfasst der Kühlkanal 72 einen ersten Abschnitt 74, der sich in dem stromabwärts der Ausgangsfläche 56 der Zündeinheit 18 angeordneten Verbrennungsabschnitt 58 der Brennkammer 12 entlang der Innenfläche 68 der Brennkammerwand 70 erstreckt.

Der durch den Kühlkanal 72 geleitete Sauerstoff strömt zumindest abschnittsweise entlang der Innenfläche 68 der Brennkammerwand 70 und bildet so einen Kühlfilm im Bereich des Kühlkanals in dem Verbrennungsabschnitt 58 der Brennkammer 12, wie mit gestrichelten Linien in Figur 3 veranschaulicht. In dem Verbrennungsabschnitt 58 der Brennkammer 12 umschließt der Kühlfilm einen durch die aus der Zündeinheit 18 austretenden Verbrennungsgase gebildeten Gaskern. Der Gaskern weist dabei Verbrennungstemperaturen auf, die größer sind als in dem Verbrennungsabschnitt 58 der Brennkammer 12 im Bereich der Innenfläche 68 der Brennkammerwand 70 vorherrschende Temperaturen.

Der erste Abschnitt 74 des Kühlkanals 72 ist in Richtung einer Mittellängsachse der Brennkammer 12 offen gestaltet. Mit anderen Worten, zwischen dem ersten Abschnitt 74 des Kühlkanals 72 und einem weiteren Bereich des Verbrennungsabschnitts 58 der Brennkammer 12 ist keine Trennwand vorgesehen. Alternativ kann in dem Verbrennungsabschnitt 58 der Brennkammer 12 eine Trennwand vorgesehen sein, die zumindest abschnittsweise den ersten Abschnitt 74 des Kühlkanals 72 von weiteren Bereichen des Verbrennungsabschnitt 58 der Brennkammer 12 trennt.

Der Kühlkanal 72 umfasst weiterhin einen zweiten Abschnitt 76, der sich zwischen einer Außenfläche 78 der Zündeinheit 18 und einem der Außenfläche 78 der Zündeinheit 18 gegenüberliegenden Abschnitt der Innenfläche 68 der Brennkammerwand 70 erstreckt und in den stromabwärts der Ausgangsfläche 56 der Zündeinheit 18 angeordneten ersten Abschnitt 74 in dem Verbrennungsabschnitt 58 der Brennkammer 12 mündet. Entsprechend ist die Katalysatorkammer 48 zumindest abschnittsweise von dem zweiten Abschnitt 76 des Kühlkanals 72 umgeben. Mit anderen Worten, der zweite Abschnitt 76 des Kühlkanals 72 ist in Form eines Ringspalts mit einem ringförmigen Strömungsquerschnitt ausgebildet. Alternativ kann in dem Kühlkanal 72, insbesondere in dem zweiten Abschnitt 76 des Kühlkanals 72, eine Mehrzahl von insbesondere parallel durchströmbaren Einzelströmungspfaden vorgesehen sein.

In der hier gezeigten Ausführungsform ist der Kühlkanal 72 mit dem Sauerstoff-Zufuhrsystem 14 verbunden. Im Speziellen ist der zweite Abschnitt 76 des Kühlkanals 72 mit dem Sauerstoffzufuhrkanal 60 verbunden, wobei der Sauerstoffzufuhrkanal 60 in den zweiten Abschnitt 76 des Kühlkanals 72 mündet. Der Sauerstoffzufuhrkanal 60 des Sauerstoff-Zufuhrsystems 14 ist dazu eingerichtet, einen zweiten Teil des in die Brennkammer 12 zugeführten Sauerstoffs über den Kühlkanal 72 in den Verbrennungsabschnitt 58 der Brennkammer 12 zu leiten.

In dem zweiten Abschnitt 76 des Kühlkanals 72 ist ein Drallerzeugungsmittel in Form eines Swirlers 79 angeordnet, der dazu eingerichtet ist, den über den Kühlkanal 72 in den Verbrennungsabschnitt 58 zuzuführenden Sauerstoff in Drall zu versetzen. So kann die Verweilzeit des den Kühlkanal 72 durchströmenden Sauerstoffs in dem Kühlkanal 72 erhöht werden. Alternativ kann das Drallerzeugungsmittel in Form von in dem Kühlkanal 72, insbesondere dem zweiten Abschnitt 76 des Kühlkanals 72, vorgesehenen tangential angestellten Bohrungen bereitgestellt sein.

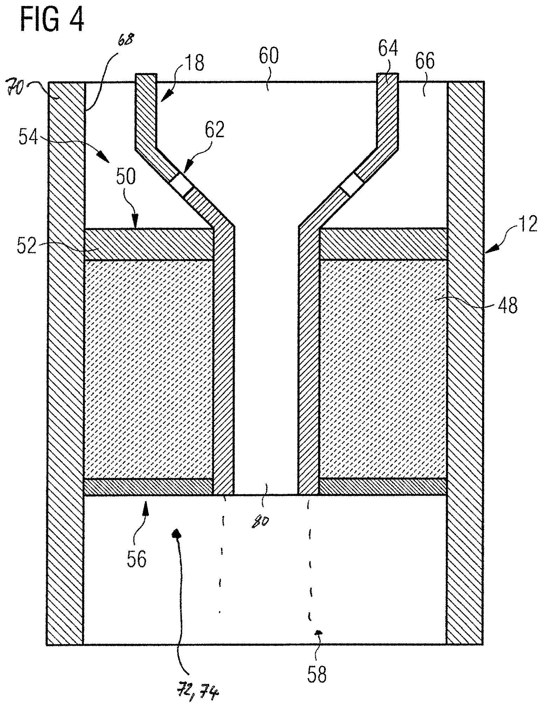

In Figur 4 ist eine Brennkammer 12 einer Anordnung des Raketenantriebssystems 10 gezeigt. Gegenüber der in Figur 3 gezeigten Ausführungsform ist der sich entlang der Innenfläche 68 der Brennkammerwand 70 erstreckende Kühlkanal 72 von einem aus der Zündeinheit 18 austretenden Verbrennungsgasgemisch durchströmbar. Entsprechend ist der entlang der Innenfläche 68 der Brennkammerwand 70 in dem Verbrennungsabschnitt 58 der Brennkammer 12 im Bereich des Kühlkanals 72 ausgebildete Kühlfilm durch die aus der Zündeinheit 18 austretenden Verbrennungsgase gebildet. Der erste Abschnitt 74 des Kühlkanals 72 ist hier mit der Ausgangsfläche 56 der Zündeinheit 18 verbunden, wobei die Ausgangsfläche 56 der Zündeinheit 18 in den ersten Abschnitt 74 des Kühlkanals 72 mündet und senkrecht zu diesem angeordnet ist.

Die Zündeinheit 18 ist weiterhin zumindest abschnittsweise von einem Kernkanal 80 durchsetzt, der von einem Teil des in die Brennkammer 12 zugeführten Sauerstoffs durchströmbar ist und diesen in den Verbrennungsabschnitt 58 der Brennkammer 12 leitet. Hierzu ist der Kernkanal 80 mit dem Sauerstoffzufuhrkanal 60 des Sauerstoff-Zufuhrsystems 14 verbunden, wobei der Sauerstoffzufuhrkanal 60 in den Kernkanal 80 mündet. Weiterhin mündet der Kernkanal 80 in den Verbrennungsabschnitt 58 der Brennkammer 12.

Der Kernkanal 80 ist dazu eingerichtet, den den Kernkanal 80 durchströmenden Sauerstoff entlang einer durch die Katalysatorkammerwand 64 gebildeten inneren Außenfläche der Katalysatorkammer 48 zu leiten. Weiterhin ist der Kernkanal 80 derart ausgebildet, dass der dem Verbrennungsabschnitt 58 der Brennkammer 12 über den Kernkanal 80 zugeführte Sauerstoff einen oxidatorreichen Gaskern in dem Verbrennungsabschnitt 58 der Brennkammer 12 bildet, der von dem durch den Kühlkanal 74 ausgebildeten Kühlfilm umschlossen wird. Der so gebildete oxidatorreiche Gaskern weist im Vergleich zu dem entlang der Innenfläche 68 der Brennkammerwand 70 ausgebildeten Kühlfilm lokal höhere Verbrennungstemperaturen auf. Mit anderen Worten, durch den den Gaskern umschließenden Kühlfilm kann eine Wärmeisolierung zwischen dem hohe Verbrennungstemperaturen aufweisenden Gaskern und der Brennkammerwand bereitgestellt werden. So kann die thermische Belastung auf die Brennkammerwand 70 während des Betriebs des Raketenantriebssystems 10 verringert werden.

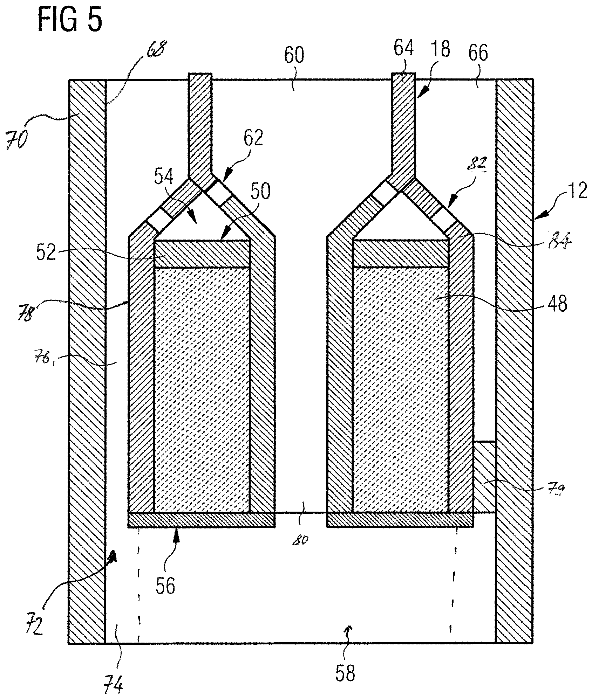

Figur 5 zeigt einen vergrößerten Längsschnitt der in Figur 1 gezeigten Brennkammer 12 eines Raketenantriebssystems 10 einer zweiten Ausführungsform. In der hier gezeigten Ausführungsform ist der sich entlang der Innenfläche 68 der Brennkammerwand 70 erstreckende Kühlkanal 72 von zumindest einem Teil des in die Brennkammer zugeführten Wasserstoffs durchströmbar. Entsprechend ist der entlang der Innenfläche 68 der Brennkammerwand 70 in dem Verbrennungsabschnitt 58 der Brennkammer 12 im Bereich des Kühlkanals 72 ausgebildete Kühlfilm durch den den Kühlkanal 72 durchströmenden Wasserstoff gebildet. Hierzu ist der Kühlkanal 72 mit dem Wasserstoff-Zufuhrsystem 16 verbunden.

Der Wasserstoffzufuhrkanal 66 des Wasserstoff-Zufuhrsystems 16 ist dazu eingerichtet, einen ersten Teil des in die Brennkammer 12 zugeführten Wasserstoffs in die Zündeinheit 18 und einen zweiten Teil des in die Brennkammer 12 zugeführten Wasserstoffs über den Kühlkanal 72 in den Verbrennungsabschnitt 58 der Brennkammer 12 zu leiten.

Der erste Teil des in die Brennkammer 12 zugeführten Wasserstoffs ist der Vormischkammer 54 der Zündeinheit 18 über eine Wasserstoffzufuhröffnung 82 zuführbar. Die Wasserstoffzufuhröffnung 82 zur Zufuhr von Wasserstoff in die Vormischkammer 54 der Zündeinheit 18 ist in einer dem Wasserstoffzufuhrkanal 66 zugewandten weiteren, äußeren Vormischkammerwand 84 ausgebildet.

Zur Zufuhr des zweiten Teils des in die Brennkammer 12 zugeführten Wasserstoffs in den Verbrennungsabschnitt 58 der Brennkammer 12 ist der zweite Abschnitt 76 des Kühlkanals 72 mit dem Wasserstoffzufuhrkanal 66 des Wasserstoff-Zufuhrsystems 16 verbunden, wobei der Wasserstoffzufuhrkanal 66 in den zweiten Abschnitt 76 des Kühlkanals 72 mündet.

Die Katalysatorkammer 48 der Zündeinheit 18 wird hier durch den Kernkanal 80 durchsetzt, der von dem zweiten Teil des in die Brennkammer 12 zugeführten Sauerstoffs durchströmbar ist und diesen in den Verbrennungsabschnitt 58 der Brennkammer 12 leitet.

Der Kühlkanal 72 ist derart ausgebildet, dass der über den Kühlkanal 72 dem Verbrennungsabschnitt 58 der Brennkammer 12 zugeführte Wasserstoff einen reaktiven und oxidatorarmen Kühlfilm an der Innenfläche der Brennkammerwand 12 in dem Verbrennungsabschnitt 58 der Brennkammer 12 ausbildet. Dies hat den Effekt, dass der gegenüber dem Kühlfilm höhere Verbrennungstemperaturen aufweisende, durch den Kernkanal 80 und die Zündeinheit 18 ausgebildete Gaskern von dem Kühlfilm umschlossen wird. So kann die thermische Belastung auf die Brennkammerwand 70 während des Betriebs des Raketenantriebssystems 10 verringert werden.

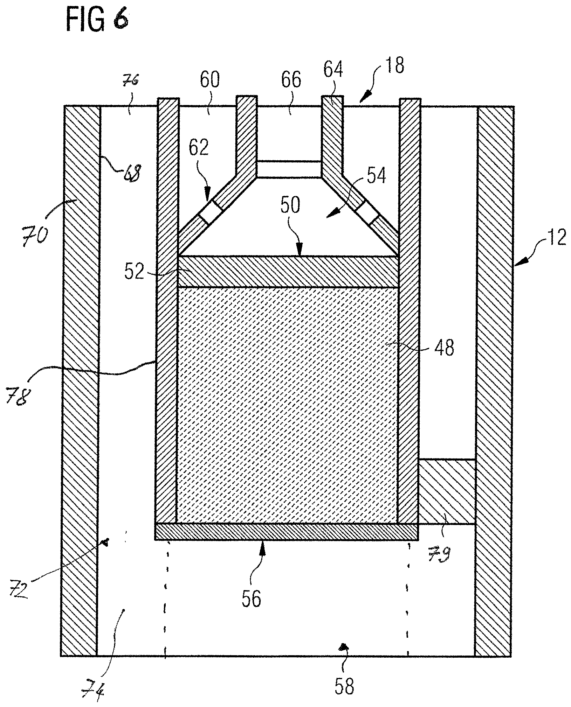

Figur 6 zeigt eine Brennkammer 12 einer dritten Ausführungsform des Raketenantriebssystems 10, die sich von der in Figur 3 gezeigten Ausführungsform durch die Ausgestaltung des Kühlkanals 72 unterscheidet.

Der Kühlkanal 72 ist derart ausgebildet, dass der zweite Abschnitt 76 des Kühlkanals 72 von dem Sauerstoffzufuhrkanal 60 stromaufwärts der Zündeinheit 18 in einem hier nicht gezeigten Bereich der Brennkammer 12 abzweigt. Dabei verläuft der zweite Abschnitt 76 des Kühlkanals 72 in einem Teilbereich parallel zu dem Sauerstoffzufuhrkanal 60.

Die Steuereinheit 20 des Raketenantriebssystems 10 kann dazu eingerichtet sein, das Sauerstoff-Zufuhrsystem 14, das Wasserstoff-Zufuhrsystem 16 und die Zündeinheit 18 derart zu steuern, dass in dem ersten Betriebsmodus und dem zweiten Betriebsmodus des Raketenantriebssystems 10 der den Kühlkanal 72 durchströmende Sauerstoffmassenstrom variiert wird. Insbesondere kann die Steuereinheit 20 dazu eingerichtet sein, das Sauerstoff-Zufuhrsystem 14, das Wasserstoff-Zufuhrsystem 16 und die Zündeinheit 18 derart zu steuern, dass der Kühlkanal 72 nur in dem zweiten Betriebsmodus des Raketenantriebssystems 10 von Sauerstoff durchströmt wird.

In einer alternativen Ausführungsform der hier gezeigten Brennkammer 12, kann die Anordnung des Sauerstoffzufuhrkanals 60 und des Wasserstoffzufuhrkanals 66 vertauscht werden, sodass der Sauerstoffzufuhrkanal 60 in die Vormischkammer 54 mündet, wobei der Vormischkammer 54 weiterhin Wasserstoff über die Öffnung 62 in der Vormischkammerwand 64 zuführbar ist. Entsprechend kann der zweite Abschnitt 76 des Kühlkanals 72 von dem Wasserstoffzufuhrkanal 66 abzweigen und insbesondere entlang zumindest eines Teilbereichs parallel zu dem Wasserstoffzufuhrkanal 66 verlaufen.

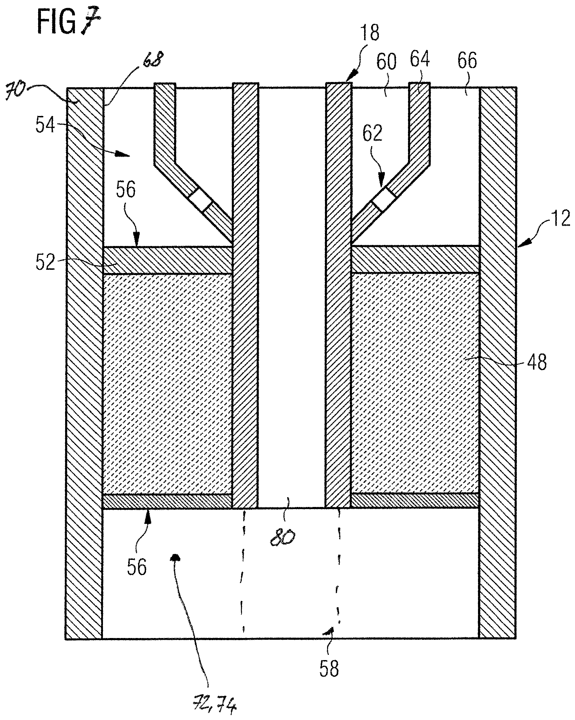

Figur 7 zeigt einen vergrößerten Längsschnitt der in Figur 1 gezeigten Brennkammer 12 des Raketenantriebssystems 10 einer weiteren Anordnung, bei der sich die Ausbildung des Kernkanals 80 gegenüber der in Figur 4 gezeigten Ausführungsform des Raketenantriebssystems 10 unterscheidet.

In der hier gezeigten Brennkammer 12 des Raketenantriebssystems 10 ist der Kernkanal 80 derart ausgebildet, dass sich dieser von dem Sauerstoffzufuhrkanal 60 stromaufwärts der Zündeinheit 18 in einem hier nicht gezeigten Bereich der Brennkammer 12 abzweigt. Dabei verläuft der Kernkanal 80 zumindest in einem Teilbereich parallel zu dem Sauerstoffzufuhrkanal 60.

Die Steuereinheit 20 kann dazu eingerichtet sein, das Sauerstoff-Zufuhrsystem 14, das Wasserstoff-Zufuhrsystem 16 und die Zündeinheit 18 derart zu steuern, dass in dem ersten Betriebsmodus und dem zweiten Betriebsmodus des Raketenantriebssystems 10 der den Kernkanal 80 durchströmende Sauerstoffmassenstrom variiert wird. Insbesondere kann die Steuereinheit 20 dazu eingerichtet sein, das Sauerstoff-Zufuhrsystem 14, das Wasserstoff-Zufuhrsystem 16 und die Zündeinheit 18 derart zu steuern, dass der Kernkanal 80 nur in dem zweiten Betriebsmodus des Raketenantriebssystems 10 von Sauerstoff durchströmt wird.

## Patentansprüche

1. Raketenantriebssystem (10), das umfasst:
- eine Brennkammer (12),
- ein Sauerstoff-Zufuhrsystem (14), das einen Sauerstoffzufuhrkanal (60) umfasst und dazu eingerichtet ist, Sauerstoff in die Brennkammer (12) zuzuführen,
- ein Wasserstoff-Zufuhrsystem (16), das einen Wasserstoffzufuhrkanal (66) umfasst und dazu eingerichtet ist, Wasserstoff in die Brennkammer (12) zuzuführen,
- eine Zündeinheit (18), der zumindest ein Teil des in die Brennkammer (12) zugeführten Sauerstoffs und zumindest ein Teil des in die Brennkammer (12) zugeführten Wasserstoffs zuführbar sind und die dazu eingerichtet ist, eine Verbrennung des Sauerstoff-Wasserstoff-Gemischs in der Brennkammer (12) zu initiieren, und
- einen Kühlkanal (72), der sich entlang einer Innenfläche (68) einer Brennkammerwand (70) erstreckt und von zumindest einem Teil des in die Brennkammer (12) zugeführten Sauerstoffs oder von zumindest einem Teil des in die Brennkammer (12) zugeführten Wasserstoffs durchströmbar ist,
**dadurch gekennzeichnet, dass** der Kühlkanal (72) einen Abschnitt (76) umfasst, der sich zwischen einer Außenfläche (78) der Zündeinheit (18) und einem der Außenfläche (78) der Zündeinheit (18) gegenüberliegenden Abschnitt der Innenfläche (68) der Brennkammerwand (70) erstreckt und in einen stromabwärts einer Ausgangsfläche (56) der Zündeinheit (18) angeordneten Verbrennungsabschnitt (58) der Brennkammer (12) mündet.

2. Raketenantriebssystem nach Anspruch 1,
wobei der Kühlkanal (72) einen weiteren Abschnitt (74) umfasst, der sich in dem stromabwärts der Ausgangsfläche (56) der Zündeinheit (18) angeordneten Verbrennungsabschnitt (58) der Brennkammer (12) entlang der Innenfläche (68) der Brennkammerwand (70) erstreckt.

3. Raketenantriebssystem nach Anspruch 1 oder 2,
wobei der Kühlkanal (72), insbesondere der Abschnitt (76) des Kühlkanals (72), mit dem Sauerstoffzufuhrkanal (60) des Sauerstoff-Zufuhrsystems (14) oder dem Wasserstoffzufuhrkanal (66) des Wasserstoff-Zufuhrsystems (16) verbunden ist, und/oder wobei in dem Kühlkanal (72), insbesondere dem Abschnitt (76) des Kühlkanals (72), ein Drallerzeugungsmittel, insbesondere ein Swirler (79), angeordnet ist, und/oder wobei in dem Kühlkanal (72) eine Mehrzahl von insbesondere parallel durchströmbaren Einzelströmungspfaden vorgesehen sind.

4. Raketenantriebssystem nach Anspruch 3,
wobei der Sauerstoffzufuhrkanal (60) oder der Wasserstoffzufuhrkanal (66) in den Kühlkanal (72), insbesondere den Abschnitt (76) des Kühlkanals (72) mündet, oder wobei der Kühlkanal (72), insbesondere der Abschnitt (76) des Kühlkanals (72), von dem Sauerstoffzufuhrkanal (60) oder dem Wasserstoffzufuhrkanal (66) abzweigt und insbesondere entlang zumindest eines Teilbereichs parallel zu dem Sauerstoffzufuhrkanal (60) oder dem Wasserstoffzufuhrkanal (66) verläuft.

5. Raketenantriebsystem nach einem der Ansprüche 1 bis 4,
wobei die Zündeinheit (18) eine Katalysatorkammer (48) und eine Vormischkammer (54) zur Vormischung des der Zündeinheit (18) zugeführten Sauerstoffs und des der Zündeinheit (18) zugeführten Wasserstoffs vor der Zufuhr des Sauerstoff-Wasserstoff-Gemischs in die Katalysatorkammer (48) umfasst.

6. Raketenantriebssystem nach Anspruch 5,
wobei:
- im Bereich einer Eingangsfläche (50) der Katalysatorkammer (48) ein Flammenrückschlagverhinderer (52) angeordnet ist und/oder
- eine Sauerstoffzufuhröffnung (62) zur Zufuhr von Sauerstoff in die Vormischkammer (54) in einer dem Sauerstoffzufuhrkanal (60) zugewandten Vormischkammerwand (64) ausgebildet ist und/oder
- der Wasserstoffzufuhrkanal (66) zur Zufuhr von Wasserstoff in die Vormischkammer (54) in die Vormischkammer (54) mündet oder eine Wasserstoffzufuhröffnung (82) zur Zufuhr von Wasserstoff in die Vormischkammer (54) in einer dem Wasserstoffzufuhrkanal (66) zugewandten Vormischkammerwand (84) ausgebildet ist.

7. Raketenantriebssystem nach einem der Ansprüche 1 bis 6,
wobei die Zündeinheit (18) zumindest abschnittsweise von einem Kernkanal (80) durchsetzt ist, der insbesondere mit dem Sauerstoffzufuhrkanal (60) des Sauerstoff-Zufuhrsystems (14) verbunden ist.

8. Raketenantriebssystem nach Anspruch 7,
wobei der Sauerstoffzufuhrkanal (60) in den Kernkanal (80) mündet oder der Kernkanal (80) von dem Sauerstoffzufuhrkanal (60) abzweigt und insbesondere entlang zumindest eines Teilbereichs parallel zu dem Sauerstoffzufuhrkanal (60) verläuft.

9. Raketenantriebssystem nach einem der Ansprüche 1 bis 8,
das ferner eine Steuereinheit (20) umfasst, die dazu eingerichtet ist, das Sauerstoff-Zufuhrsystem (14) und das Wasserstoff-Zufuhrsystem (16) derart zu steuern, dass das Raketenantriebssystem (10) alternierend in einem ersten Betriebsmodus, in dem Sauerstoff und Wasserstoff in einem ersten Massenmischungsverhältnis von Sauerstoff zu Wasserstoff in die Brennkammer (12) zugeführt werden, und einem zweiten Betriebsmodus, in dem Sauerstoff und Wasserstoff in einem zweiten Massenmischungsverhältnis von Sauerstoff zu Wasserstoff, das größer ist als das erste Massenmischungsverhältnis, in die Brennkammer (12) zugeführt werden, betrieben wird.

10. Verfahren zum Betreiben eines Raketenantriebssystems, das umfasst:
- Zuführen von Sauerstoff in eine Brennkammer (12),
- Zuführen von Wasserstoff in die Brennkammer (12),
- Leiten zumindest eines Teils des in die Brennkammer (12) zugeführten Sauerstoffs und zumindest eines Teils des in die Brennkammer zugeführten Wasserstoffs in eine Zündeinheit (18),
- Initiierten einer Verbrennung des Sauerstoff-Wasserstoff-Gemischs in der Brennkammer (12) mittels der Zündeinheit (18), und
- Leiten zumindest eines Teils des in die Brennkammer (12) zugeführten Sauerstoffs oder zumindest eines Teils des in die Brennkammer (12) zugeführten Wasserstoffs durch einen Kühlkanal (72), der sich entlang einer Innenfläche (68) einer Brennkammerwand (70) erstreckt,
**dadurch gekennzeichnet, dass** der Kühlkanal (72) einen Abschnitt (76) umfasst, der sich zwischen einer Außenfläche (78) der Zündeinheit (18) und einem der Außenfläche (78) der Zündeinheit (18) gegenüberliegenden Abschnitt der Innenfläche (68) der Brennkammerwand (70) erstreckt und in einen stromabwärts einer Ausgangsfläche (56) der Zündeinheit (18) angeordneten Verbrennungsabschnitt (58) der Brennkammer (12) mündet.

11. Verfahren nach Anspruch 10,
wobei der Kühlkanal (72) einen weiteren Abschnitt (74) umfasst, der sich in dem stromabwärts der Ausgangsfläche (56) der Zündeinheit (18) angeordneten Verbrennungsabschnitt (58) der Brennkammer (12) entlang der Innenfläche (68) der Brennkammerwand (70) erstreckt.

12. Verfahren nach Anspruch 10 oder 11, wobei der Kühlkanal (72), insbesondere der Abschnitt (76) des Kühlkanals (72), mit einem Sauerstoffzufuhrkanal (60) eines Sauerstoff-Zufuhrsystems (14) oder einem Wasserstoffzufuhrkanal (66) eines Wasserstoff-Zufuhrsystems (16) verbunden ist, und/oder wobei in dem Kühlkanal (72), insbesondere dem Abschnitt (76) des Kühlkanals (72), ein Drallerzeugungsmittel, insbesondere ein Swirler (79), ange-ordnet ist, und/oder wobei in dem Kühlkanal (72) eine Mehrzahl von insbesondere parallel durchströmbaren Einzelströmungspfaden vorgesehen sind.

13. Verfahren nach Anspruch 12,
wobei der Sauerstoffzufuhrkanal (60) oder der Wasserstoffzufuhrkanal (66) in den Kühlkanal (72), insbesondere den Abschnitt (76) des Kühlkanals (72) mündet, oder wobei der Kühlkanal (72), insbesondere der Abschnitt (76) des Kühlkanals (72) von dem Sauerstoffzufuhrkanal (60) oder dem Wasserstoffzufuhrkanal (66) abzweigt und insbesondere entlang zumindest eines Abschnitts parallel zu dem Sauerstoffzufuhrkanal (60) oder dem Wasserstoffzufuhrkanal (66) verläuft.

## Claims

1. A rocket propulsion system (10), which comprises:
- a combustion chamber (12),
- an oxygen supply system (14), which comprises an oxygen supply duct (60) and is configured to supply oxygen to the combustion chamber (12),
- a hydrogen supply system (16), which comprises a hydrogen supply duct (66) and is configured to supply hydrogen to the combustion chamber (12),
- an ignition unit (18), to which at least a portion of the oxygen supplied to the combustion chamber (12) and at least a portion of the hydrogen supplied to the combustion chamber (12) can be supplied and which is configured to initiate combustion of the oxygen-hydrogen mixture in the combustion chamber (12), and
- a cooling duct (72), which extends along an inner surface (68) of a combustion chamber wall (70) and which is adapted to be flown through with at least a portion of the oxygen supplied to the combustion chamber (12) or at least a portion of the hydrogen supplied to the combustion chamber (12),
**characterized in that** the cooling duct (72) comprises a section (76), which extends between an outer surface (78) of the ignition unit (18) and a section of the inner surface (68) of the combustion chamber wall (70) lying opposite the outer surface (78) of the ignition unit (18) and opens into a combustion section (58) of the combustion chamber (12) arranged downstream of an exit area (56) of the ignition unit (18).

2. The rocket propulsion system according to claim 1,
wherein the cooling duct (72) comprises a further section (74), which extends in the combustion section (58) of the combustion chamber (12) arranged downstream of the exit area (56) of the ignition unit (18) along the inner surface (68) of the combustion chamber wall (70).

3. The rocket propulsion system according to claim 1 or 2,
wherein the cooling duct (72), in particular the section (76) of the cooling duct (72), is connected to the oxygen supply duct (60) of the oxygen supply system (14) or the hydrogen supply duct (66) of the hydrogen supply system (16), and/or wherein a swirl generation means, in particular a swirler (79), is arranged in the cooling duct (72), in particular the section (76) of the cooling duct (72), and/or wherein a plurality of individual flow paths, through which a parallel flow is possible in particular, are provided in the cooling duct (72).

4. The rocket propulsion system according to claim 3,
wherein the oxygen supply duct (60) or the hydrogen supply duct (66) opens into the cooling duct (72), in particular the section (76) of the cooling duct (72), or wherein the cooling duct (72), in particular the section (76) of the cooling duct (72), branches off from the oxygen supply duct (60) or the hydrogen supply duct (66) and runs in particular along at least a partial area parallel to the oxygen supply duct (60) or the hydrogen supply duct (66).

5. The rocket propulsion system according to anyone of claims 1 to 4,
wherein the ignition unit (18) comprises a catalyst chamber (48) and a premixing chamber (54) for premixing the oxygen supplied to the ignition unit (18) and the hydrogen supplied to the ignition unit (18) prior to supplying the oxygen-hydrogen mixture to the catalyst chamber (48).

6. The rocket propulsion system according to claim 5, wherein:
- a flashback arrestor (52) is arranged in the region of an entrance area (50) to the catalyst chamber (48) and/or
- an oxygen supply opening (62) for supplying oxygen to the premixing chamber (54) is formed in a wall of the premixing chamber (64) facing the oxygen supply duct (60) and/or
- the hydrogen supply duct (66) for supplying hydrogen to the premixing chamber (54) opens into the premixing chamber (54) or a hydrogen supply opening (82) for supplying hydrogen to the premixing chamber (54) is formed in a premixing chamber wall (84) facing the hydrogen supply duct (66).

7. The rocket propulsion system according to anyone of claims 1 to 6,
wherein a core duct (18) passes through the ignition unit (18), at least in sections, which core duct (18) is connected in particular to the oxygen supply duct (60) of the oxygen supply system (40).

8. The rocket propulsion system according to claim 7,
wherein the oxygen supply duct (60) opens into the core duct (80) or the core duct (80) branches off from the oxygen supply duct (60) and runs in particular along at least a partial area parallel to the oxygen supply duct (60).

9. The rocket propulsion system according to anyone of claims 1 to 8,
which further comprises a control unit (20), which is configured to control the oxygen supply system (14) and the hydrogen supply system (16) so that the rocket propulsion system (10) is operated alternately in a first operating mode, in which oxygen and hydrogen are supplied to the combustion chamber (12) in a first mass mixing ratio of oxygen to hydrogen, and in a second operating mode, in which oxygen and hydrogen are supplied to the combustion chamber (12) in a second mass mixing ratio of oxygen to hydrogen that is greater than the first mass mixing ratio.

10. A method for operating a rocket propulsion system, which comprises:
- supplying oxygen to a combustion chamber (12),
- supplying hydrogen to the combustion chamber (12),
- conducting at least a portion of the oxygen supplied to the combustion chamber (12) and at least a portion of the hydrogen supplied to the combustion chamber (12) into an ignition unit (18),
- initiating combustion of the oxygen-hydrogen mixture in the combustion chamber (12) by means of the ignition unit (18), and
- conducting at least a portion of the oxygen supplied to the combustion chamber (12) or at least a portion of the hydrogen supplied to the combustion chamber (12) through a cooling duct (72), which extends along an inner surface (68) of a combustion chamber wall (70),
**characterized in that** the cooling duct (72) comprises a section (76), which extends between an outer surface (78) of the ignition unit (18) and a section of the inner surface (68) of the combustion chamber wall (70) lying opposite the outer surface (78) of the ignition unit (18) and opens into a combustion section (58) of the combustion chamber (12) arranged downstream of an exit area (56) of the ignition unit (18).

11. The method according to claim 10,
wherein the cooling duct (72) comprises a further section (74), which extends in the combustion section (58) of the combustion chamber (12) arranged downstream of the exit area (56) of the ignition unit (18) along the inner surface of the combustion chamber wall (70).

12. The method according to claim 10 or 11,
wherein the cooling duct (72), in particular the section (76) of the cooling duct (72), is connected to an oxygen supply duct (60) of an oxygen supply system (14) or a hydrogen supply duct (66) of a hydrogen supply system (16) and/or wherein in the cooling duct (72), in particular the section (76) of the cooling duct (72), a swirl generation means, in particular a swirler (79), is arranged, and/or wherein a plurality of individual flow paths, through which an in particular parallel flow is possible, are provided in the cooling duct (72).

13. The method according to claim 12,
wherein the oxygen supply duct (60) or the hydrogen supply duct (66) opens into the cooling duct (72), in particular into the section (76) of the cooling duct (72), or wherein the cooling duct (72), in particular the section (76) of the cooling duct (72), branches off from the oxygen supply duct (60) or the hydrogen supply duct (6) and runs in particular along at least a section parallel to the oxygen supply duct (60) or the hydrogen supply duct (66).

## Revendications

1. Système de propulsion de fusée (10), comprenant :
- une chambre de combustion (12),
- un système d'alimentation en oxygène (14) qui comprend un conduit d'alimentation en oxygène (60) et qui est conçu pour amener de l'oxygène dans la chambre de combustion (12),
- un système d'alimentation en hydrogène (16) qui comprend un conduit d'alimentation en hydrogène (66) et qui est conçu pour amener de l'hydrogène dans la chambre de combustion (12),
- une unité de mise à feu (18) dans laquelle peuvent être amenées au moins une partie de l'oxygène amené dans la chambre de combustion (12) et au moins une partie de l'hydrogène amené dans la chambre de combustion (12), et laquelle est conçue pour amorcer une combustion du mélange oxygène-hydrogène dans la chambre de combustion (12), et
- un conduit de refroidissement (72) qui s'étend le long d'une surface intérieure (68) d'une paroi (70) de la chambre de combustion et qui peut être traversé par au moins une partie de l'oxygène amené dans la chambre de combustion (12) et par au moins une partie de l'hydrogène amené dans la chambre de combustion (12),
**caractérisé en ce que** le conduit de refroidissement (72) comprend un tronçon (76) qui s'étend entre une surface extérieure (78) de l'unité de mise à feu (18) et une partie de la surface intérieure (68) de la paroi (70) de la chambre de combustion opposée à la surface extérieure (78) de l'unité de mise à feu (18) et qui débouche dans un tronçon de combustion (58) de la chambre de combustion (12) placé en aval d'une surface de sortie (56) de l'unité de mise à feu (18).

2. Système de propulsion de fusée selon la revendication 1,
le conduit de refroidissement (72) comprenant un tronçon supplémentaire (74) qui s'étend dans le tronçon de combustion (58) de la chambre de combustion (12) placé en aval de la surface de sortie (56) de l'unité de mise à feu (18), le long de la surface intérieure (68) de la paroi (70) de la chambre de combustion.

3. Système de propulsion de fusée selon la revendication 1 ou 2,
le conduit de refroidissement (72), en particulier le tronçon (76) du conduit de refroidissement (72), étant relié au conduit d'alimentation en oxygène (60) du système d'alimentation en oxygène (14) ou au conduit d'alimentation en hydrogène (66) du système d'alimentation en hydrogène (16), et/ou un système de tourbillonnement, en particulier un tourbillonneur (79), étant placé dans le conduit de refroidissement (72), et/ou une pluralité de chemins d'écoulement individuels, qui peuvent être traversés parallèlement, étant prévue dans le conduit de refroidissement (72).

4. Système de propulsion de fusée selon la revendication 3,
le conduit d'alimentation en oxygène (60) ou le conduit d'alimentation en hydrogène (66) débouchant dans le conduit de refroidissement (72), en particulier dans le tronçon (76) du conduit de refroidissement (72), ou le conduit de refroidissement (72), en particulier le tronçon (76) du conduit de refroidissement (72), bifurquant du conduit d'alimentation en oxygène (60) ou du conduit d'alimentation en hydrogène (66) et s'étendant, en particulier le long d'au moins une partie, parallèlement au conduit d'alimentation en oxygène (60) ou au conduit d'alimentation en hydrogène (66).

5. Système de propulsion de fusée selon l'une des revendications 1 à 4, l'unité de mise à feu (18) comprenant une chambre de catalyseur (48) et une chambre de pré-mélange (54) servant au pré-mélange de l'oxygène et de l'hydrogène amenés dans l'unité de mise à feu (18) avant l'arrivée du mélange oxygène-hydrogène dans la chambre de catalyseur (48).

6. Système de propulsion de fusée selon la revendication 5 :
- un dispositif de non-retour de flammes (52) étant placé dans la zone d'une surface d'entrée (50) de la chambre de catalyseur (48) et/ou
- une ouverture d'alimentation en oxygène (62) destinée à amener de l'oxygène dans la chambre de pré-mélange (54) étant réalisée dans une paroi (64) de la chambre de pré-mélange tournée vers le conduit d'alimentation en oxygène (60) et/ou
- le conduit d'alimentation en hydrogène (66) destiné à amener de l'hydrogène dans la chambre de pré-mélange (54) débouchant dans la chambre de pré-mélange (54), ou une ouverture d'alimentation en hydrogène (22) destinée à amener de l'hydrogène dans la chambre de pré-mélange (54) étant réalisée dans une paroi (84) de la chambre de pré-mélange tournée vers le conduit d'alimentation en hydrogène (66).

7. Système de propulsion de fusée selon l'une des revendications 1 à 6,
l'unité de mise à feu (18) étant traversée au moins en partie par un conduit central (80) relié en particulier au conduit d'alimentation en oxygène (60) du système d'alimentation en oxygène (14).

8. Système de propulsion de fusée selon la revendication 7,
le conduit d'alimentation en oxygène (60) débouchant dans le conduit central (80) ou le conduit central (80) bifurquant du conduit d'alimentation en oxygène (60) et s'étendant, en particulier le long d'au moins une partie, parallèlement au conduit d'alimentation en oxygène (60).

9. Système de propulsion de fusée selon l'une des revendications 1 à 8,
qui comprend en outre une unité de commande (20) qui est conçue pour commander le système d'alimentation en oxygène (14) et le système d'alimentation en hydrogène (16) de telle manière que le système de propulsion de fusée (10) fonctionne en alternance dans un premier mode de fonctionnement dans lequel de l'oxygène et de l'hydrogène sont amenés dans la chambre de combustion (12), selon un premier rapport de mélange entre la masse d'oxygène et la masse d'hydrogène, et dans un deuxième mode de fonctionnement dans lequel de l'oxygène et de l'hydrogène sont amenés dans la chambre de combustion (12) selon un deuxième rapport de mélange entre la masse d'oxygène et la masse d'hydrogène qui est supérieur au premier rapport de mélange de masse.

10. Procédé pour faire fonctionner un système de propulsion de fusée, comprenant :
- l'amenée d'oxygène dans une chambre de combustion (12),
- l'amenée d'hydrogène dans la chambre de combustion (12),
- l'acheminement vers une unité de mise à feu (18) d'au moins une partie de l'oxygène amené dans la chambre de combustion (12) et au moins d'une partie de l'hydrogène amené dans la chambre de combustion (12),
- l'amorçage au moyen de l'unité de mise à feu (18) d'une combustion du mélange oxygène-hydrogène dans la chambre de combustion (12), et
- l'acheminement d'au moins une partie de l'oxygène amené dans la chambre de combustion (12) et au moins d'une partie de l'hydrogène amené dans la chambre de combustion au travers d'un conduit de refroidissement (72) qui s'étend le long d'une surface intérieure (68) d'une paroi (70) de la chambre de combustion,
**caractérisé en ce que** le conduit de refroidissement (72) comprend un tronçon (76) qui s'étend entre une surface extérieure (78) de l'unité de mise à feu (18) et une partie de la surface intérieure (68) de la paroi (70) de la chambre de combustion opposée à la surface extérieure (78) de l'unité de mise à feu (18) et qui débouche dans un tronçon de combustion (58) de la chambre de combustion (12) placé en aval d'une surface de sortie (56) de l'unité de mise à feu (18).

11. Procédé selon la revendication 10,
le conduit de refroidissement (72) comprenant un tronçon supplémentaire (74) qui s'étend dans le tronçon de combustion (58) de la chambre de combustion (12) disposé en aval de la surface de sortie (56) de l'unité de mise à feu (18), le long de la surface intérieure (68) de la paroi (70) de la chambre de combustion.

12. Procédé selon la revendication 10 ou 11,
le conduit de refroidissement (72), en particulier le tronçon (76) du conduit de refroidissement (72), étant relié à un conduit d'alimentation en oxygène (60) du système d'alimentation en oxygène (14) ou à un conduit d'alimentation en hydrogène (66) du système d'alimentation en hydrogène (16), et/ou un système de tourbillonnement, en particulier un tourbillonneur (79), étant placé dans le conduit de refroidissement (72), en particulier dans le tronçon (76) du conduit de refroidissement (72), et/ou une pluralité de chemins d'écoulement individuels, qui peuvent être traversés parallèlement, étant prévu dans le conduit de refroidissement (72).

13. Procédé selon la revendication 12,
le conduit d'alimentation en oxygène (60) ou le conduit d'alimentation en hydrogène (66) débouchant dans le conduit de refroidissement (72), en particulier dans le tronçon (76) du conduit de refroidissement (72), ou le conduit de refroidissement (72), en particulier le tronçon (76) du conduit de refroidissement (72), bifurquant du conduit d'alimentation en oxygène (60) ou du conduit d'alimentation en hydrogène (66) et s'étendant, en particulier le long d'au moins une partie, parallèlement au conduit d'alimentation en oxygène (60) ou au conduit d'alimentation en hydrogène (66).
